# EUROPÄISCHE PATENTSCHRIFT

(11) **EP 1 309 952 B1**
(45) Veröffentlichungstag und Bekanntmachung des Hinweises auf die Patenterteilung: **23.11.2005**
(21) Anmeldenummer: 01965185.0
(22) Anmeldetag: 02.08.2001
(51) Int. Cl.: G07F 19/00

(54) **VERFAHREN ZUR ÜBERTRAGUNG EINES ELEKTRONISCHEN GELDBETRAGES AUS EINEM GUTHABENSPEICHER**
METHOD FOR THE TRANSMISSION OF AN ELECTRONIC SUM OF MONEY FROM A CREDIT RESERVE
PROCEDE PERMETTANT DE TRANSMETTRE UNE SOMME D'ARGENT ELECTRONIQUE A PARTIR D'UN SYSTEME D'ENREGISTREMENT D'AVOIR

(30) Priorität: 18.08.2000 EP 00117858
(43) Veröffentlichungstag der Anmeldung: 14.05.2003
(73) Patentinhaber: SIEMENS AKTIENGESELLSCHAFT, 80333 München (DE)
(72) Erfinder: WOLF, Hans-Hermann, 81829 München (DE)
(86) Internationale Anmeldenummer: PCT/EP2001/009215
(87) Internationale Veröffentlichungsnummer: WO 2002/017257

(56) Entgegenhaltungen:
- EP-A- 0 630 165
- EP-A- 0 986 275
- EP-A- 1 011 274
- EP-A- 1 016 999
- EP-A- 1 107 196
- WO-A-96/15633
- WO-A-98/34203
- WO-A-98/47116
- WO-A-99/16024
- WO-A-99/23590
- US-A- 5 905 954
- US-A- 5 915 222
- US-A- 5 995 822
- US-A- 6 044 259
- US-A- 6 625 268

## Beschreibung

Die Erfindung betrifft ein Verfahren zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Das Dokument EP-A-986275 offenbart ein System zur Bezahlung von Produkten/Dienstleistungen unter Verwendung von Mobiltelefonen, wobei ein Prepaid-Konto für den Geldsender im System eingerichtet wird. Die Informationen bezüglich der Bezahlung werden in einem Zentralrechner verwaltet. Dieses System im Stand der Technik funktioniert unter Verwendung von herkömmlichen Telefonnummern im Mobilfunknetzwerk.

Der Erfindung liegt daher die Aufgabe zugrunde, ein Verfahren zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1.

Bevorzugte Ausführungsbeispiel werden in den Ansprüchen 2-5 offenbart.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C (Business-2-Consumer)-Bereich wie auch im C2C (Consumer-2-Consumer)-Bereich anwendbar ist, also sowohl den Einkauf in realen und virtuellen Geschäften, die Bezahlung in gastronomischen oder kulturellen Einrichtungen, an Warenausgabeautomaten etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time).

Unter einem elektronischen Guthaben wird hier ein Speicherinhalt eines über ein Telekommunikations- bzw. Datennetz zur Durchführung von Zahlungsverkehr handhabbaren Guthabenspeichers verstanden, grundsätzlich unabhängig davon, ob der Speicher tatsächlich ein vorausbezahltes Guthaben aufweist oder ein Guthabenbetrag erst zu einem späteren Zeitpunkt transferiert wird. In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch einen Anruf des Geldempfängers bei dem Geldsender von einer eigens zu diesem Zweck eingerichteten Rufnummer aus. Diese Rufnummer ist in der Transaktions-Datenbasis gespeichert und dient gewissermaßen als Adresse eines für den Geldübertragungsvorgang relevanten Geldempfänger-Datensatzes. Ein wesentliches Merkmal der Erfindung besteht darin, daß der zu übertragende Geldbetrag seitens des Geldempfängers an seinem Endgerät bzw. einer diesem zugeordneten Kasse oder Eingabevorrichtung eingegeben wird.

Ein sogenannter "Switch" des Geldsenders - speziell ein Trigger im HLR (Home Location Register) bei einem Mobilfunkrietz - stellt eine Anfrage an einen Server (z. B. den SCP = Service Control Point eines intelligenten Netzes), wie dieser Ruf ausgeführt werden soll. Anhand der Rufnummer wird erkannt, daß es sich nicht um einen normalen Anruf für den Teilnehmer, sondern um einen speziellen Anruf zur Abwicklung einer Geldübertragung handelt. Diese Spezifikation kann in einem Abschnitt der Rufnummer verschlüsselt sein, oder sie wird aufgrund dessen deutlich, daß durch den Server "probeweise" ein Zugriff auf die Transaktions-Datenbasis ausgeführt wird und dieser Zugriff erfolgreich ist.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt - wird. Der Nutzer muß lediglich über ein vorausbezahltes Guthaben verfügen, das eine für die vorgesehene Geldübertragung ausreichende Deckung gewährleistet.

Jeder Geldempfänger, der die Möglichkeit der Geldübertragung von Prepaid-Guthaben eines Partners auf sein eigenes Konto nutzen möchte, muß einen die Geldübertragung realisierenden Dienst subskribieren. Mit dem Subskriptionsvorgang wird ein ihn betreffender Datensatz in der Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Identifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Neben den Informationen zum Geldempfänger enthält die Shopping-Datenbank bevorzugt auch die zur Durchführung der Geldübertragung erforderlichen Informationen bezüglich des Geldsenders. Dieser Geldsender-Datensatz enthält zweckmäßigerweise die Kontonummer seines Prepaid-Kontos und erforderlichenfalls die Serveradresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers. Als "Adresse" bzw. "Schlüssel" für diesen Datensatz dient zweckmäßigerweise die Geldsender-Rufnummer.

Der Geldsender-Datensatz kann auch in einer separaten Prepaid-Datenbasis hinterlegt sein.

Eine wesentliche Sicherheitskomponente stellt der bereits erwähnte Authentisierungsdatensatz innerhalb des Geldsender-Datensatzes dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Endgerät des Geldsenders oder an einem diesem zugeordneten Eingabegerät eingegeben, zum Transaktions-Server übermittelt und dort mit den entsprechenden hinterlegten Daten verglichen. Im Ergebnis des Vergleiches wird die Transaktion freigegeben oder gesperrt.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Beim Einsatz der vorgeschlagenen Lösung in realen Läden, gastronomischen Einrichtungen etc. erfolgt die Eingabe des zu übertragenden Geldbetrages gegebenenfalls durch eine mit dem Endgerät des Geldempfängers verbundene Kasse, wodurch Eingabefehler und Manipulationen praktisch ausgeschlossen werden.

Die vorgeschlagene Lösung, die sinnbildlich auch als "Prepaid-Shopping-Anwendung" bezeichnet werden kann, umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netz- und Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene System erbringt (neben bereits genannten Vorteilen) den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Beim Geldempfänger sind für die Bezahlung von Waren oder Dienstleistungen verschiedener Anbieter nicht länger mehrere Prepaid-Karten oder -Endgeräte erforderlich, sondern nur die Speicherung einer einzigen Prepaid-Rufnummer.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer ersten Ausführungsform der erfindungsgemäßen Anordnung,
Figur 2 ein stark vereinfachtes Funktions-Blockschaltbild einer zweiten Ausführungsform der erfindungsgemäßen Anordnung und

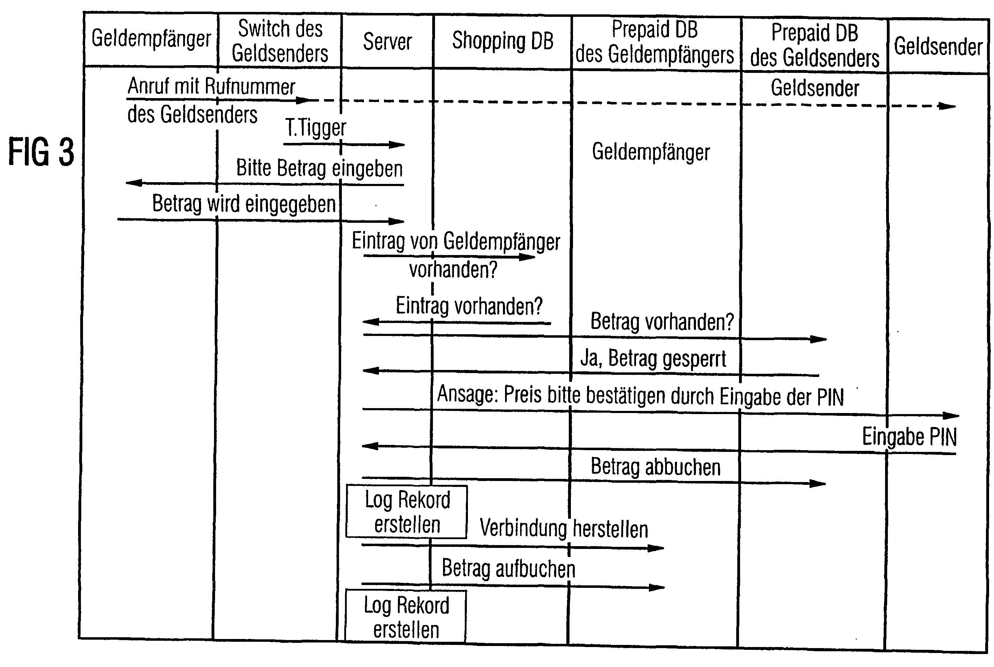

Figur 3 eine schematische Darstellung der wesentlichen Schritte der vorgeschlagenen Anwendung bei der Anordnung nach Fig. 1.

Die Figuren sind aufgrund ihrer Beschriftung im wesentlichen selbsterklärend, so daß nachfolgend keine detaillierte Figurenbeschreibung gegeben wird.

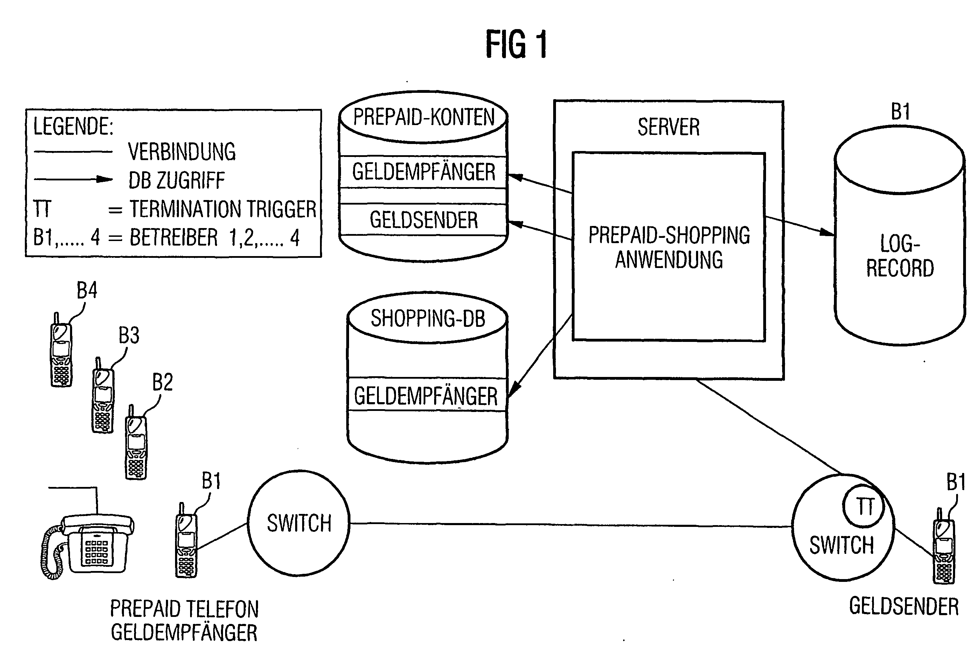

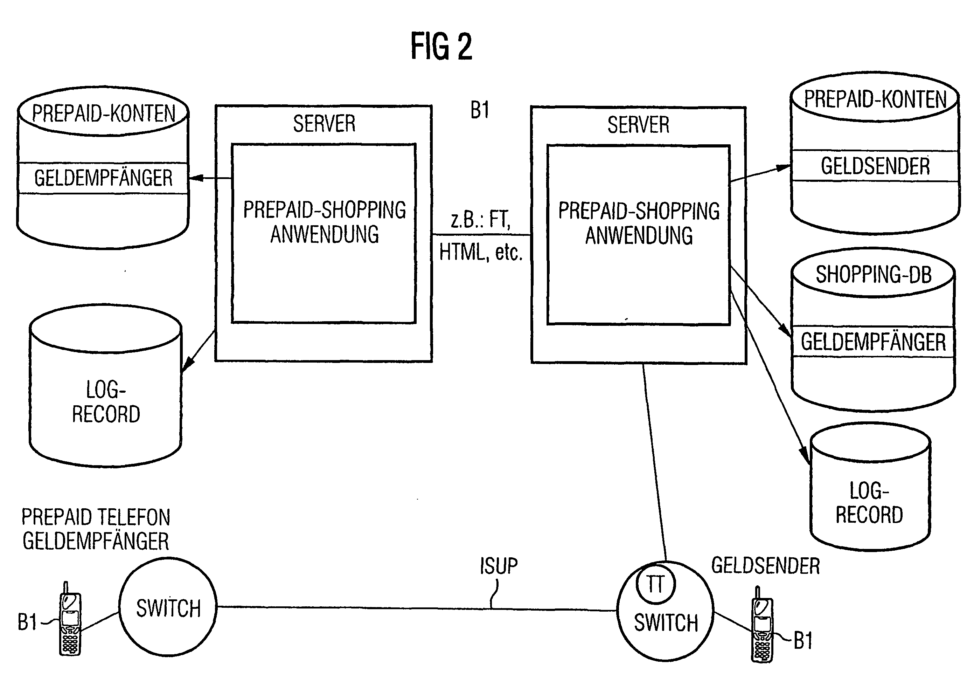

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen der Fall dargestellt, daß Prepaid-Konten des Geldsenders und Geldempfängers auf einem anderen Server als demjenigen verwaltet werden auf dem die Prepaid-Shopping-Anwendung läuft.

Ein wesentliches Merkmal des vorgeschlagenen Verfahrens ist die Verfügbarkeit einer speziellen Transaktions-Rufnummer eines beliebigen Telekommunikations-Endgerätes eines beliebigen Betreibers (herkömmliches Telefon oder Telefon mit Prepaid-Karte in einem Mobilfunknetz oder dem Festnetz) für den Geldempfänger. Die Rufnummer ist speziell für Geldübertragungen zugewiesen und kann nicht für normale Telefongespräche genutzt werden. Ihre Zuweisung an den Geldempfänger erfolgt im Rahmen einer Subskription eines von einem Dienstbetreiber angebotenen Geldübertragungs-Dienstes. Die Rufnummer wird in einer Transaktions-Datenbasis SHOPPING DB als spezielle Geldempfänger-Rufnummer hinterlegt. (In Fig. 1 ist mit den Bezugsziffern B1 bis B4 angedeutet, daß der Geldempfänger eine Mehrzahl von Transaktions- bzw. Prepaid-Rufnummern bei verschiedenen Betreibern unterhalten kann.)

Der Geldübertragungsvorgang wird durch einen Anruf des Geldempfängers von der Transaktions-Rufnummer aus beim Geldsender eingeleitet. Hierbei wird beispielsweise im Anschluß an die Rufnummer - von dieser durch einen Stern (*) abgetrennt - der zu übertragende Geldbetrag in der relevanten Währung als unstrukturierte Ziffernfolge am Endgerät des Geldempfängers eingegeben. Hierzu wird insbesondere dessen Tastatur benutzt; grundsätzlich kann im Rahmen einer entsprechend ausgebildeten Menüführung aber auch eine Spracheingabe erfolgen.

Bei der hier angenommenen Ausführung des Geldsender-Endgerätes als Mobiltelefon wird über einen Trigger im HLR des Mobilfunknetzes eine Anfrage an den Server - speziell bei einem SCP des Mobilfunknetzes realisiert - bezüglich der Ausführung des eingeleiteten Rufes gestellt. Der Server greift mit der Transaktions-Rufnummer des Geldempfängers auf die Shopping-Datenbank zu und sucht einen der Rufnummer entsprechenden Eintrag. Wird ein Eintrag gefunden, so ist der Anruf als Anruf zur Abwicklung einer Geldübertragung spezifiziert, und es werden entsprechende Prüfungen und Folgehandlungen initiiert.

Nach Übermittlung der Daten, mit dem das Geldübertragungsverfahren gestartet ist, folgt zunächst ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldsender-Datensatz mit den darin enthaltenden Informationen, auf welchem Server bzw. welchen Servern (und bei welchem Betreiber bzw. welchen Betreibern) sich das Konto des Geldsenders befindet. Der Server des Geldsenders wird identifiziert, und es wird, falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

An die Prepaid-Shopping-Anwendung auf dem Server des Geldsenders wird eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender an seinem Endgerät, gegebenenfalls per SMS o.ä. Die eingegebene PIN wird mit der im Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungsanforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheiden - je nachdem, ob das Konto auf einem fremden Server geführt wird oder nicht. Auch für den Aufbuchungsvorgang wird ein Log-Record erstellt und Geldempfänger und Geldsender können unmittelbar nach Ausführung informiert werden.

## Patentansprüche

1. Verfahren zur Übertragung eines elektronischen Geldbetrages aus einem über ein Telekommunikations- oder Datennetz handhabbaren Guthabenspeicher (Prepaid-Konten Geldsender) eines Geldsenders, der ein vorausbezahltes Guthaben aufweist, auf ein Konto bzw. in einen Guthabenspeicher eines Geldempfängers (Prepaid-Konten Geldempfänger) über ein Telekommunikations- und Datennetz in Echtzeit, mit den Schritten:
- Aufbauanfrage einer ersten Verbindung ausgehend von einem Mobilfunk-Endgerät des Geldempfängers (B1, B2, B3, B4 Geldempfänger), dem eine Transaktions-Rufnummer zugeordnet ist, zu dem Mobilfunk-Endgerät des Geldsenders (B1 Geldsender)
- wobei die dem Mobilfunk-Endgerät des Geldempfängers zugeordnete Transaktions-Rufnummer im Rahmen einer Subskription eines Geldübertragungs-Dienstes durch den Geldempfänger bei einem Dienstbetreiber speziell für Geldübertragungen zugewiesen ist und nicht für normale Telefongespräche benutzt werden kann, und die Transaktions-Rufnummer einen Konto-Identifikator des Kontos bzw. Guthabenspeichers des Geldempfängers umfasst wobei der Geldempfänger-Datensatz in einer Transaktions - Datenbasis gespeichert ist, und
- Herstellen einer Verbindung zu einem Transaktions-Server des Dienstbetreibers, durch Auslösen eines Trigger.(TT) im Mobilfunknetz (Switch) durch die Aufbauanfrage,
- Eingabe des zu übertragenden Geldbetrages am Mobilfunk-Endgerät des Geldempfängers
- Übermittlung des zu übertragenden Geldbetrages an den Transaktions-Server, und
- Abfrage eines in der Transaktions-Datenbasis oder einer Guthabenverwaltungs-Datenbasis gespeicherten Geldsender-Datensatzes, der mindestens eine Rufnummer eines Mobilfunk-Endgerätes, einen Konto-Identifikator des Guthabenspeichers und einen Authentisierungsdatensatz des Geldsenders umfasst,
- Auslesen aus der Transaktions-Datenbasis und Auswertung des Geldempfänger-Datensatzes und des Geldsender-Datensatzes durch den Transaktions-Server, einschließlich Herstellung optional erforderlicher Datenverbindung(en) zu einer oder mehreren externen Anwendung(en),
- Prüfung der Deckung des Geldbetrages im Geldsender-Guthabenspeicher und Reservierung des Geldbetrages im Deckungsfall und Abbruch mit Signalisierung im Unterdeckungsfall,
- Abbuchung des Geldbetrages aus dem Geldsender-Guthabenspeicher und Dokumentation derselben,
- Aufbuchung des Geldbetrages auf das Geldempfanger-Konto bzw. den Geldempfänger-Guthabenspeicher und Dokumentation derselben,
- Übermittlung einer Information über die Ab- und/oder die Aufbuchung an das Mobilfunk-Endgerät des Geldempfängers.

2. Verfahren nach Anspruch 1,
**dadurch gekennzeichnet, dass**
der Authentisierungsdatensatz im Geldsender-Datensatz einen Authentisierungscode oder biometrische Daten des Geldsenders umfasst und vor dem Schritt der Abbuchung Schritte zur Autorisierung derselben ausgeführt werden, nämlich die Schritte:
- Eingabe des Authentisierungscodes oder der biometrischen Daten durch den Geldsender an seinem Mobilfunk-Endgerät,
- Übermittlung derselben zum Transaktions-Server und
- Vergleich der übermittelten mit den im Geldsenser-Datensatz vorliegenden Daten und Ausgabe eines Abbuchungs-Freigabesignals bei Übereinstimmung bzw. eines Abbuchungs-Sperrsignals bei Nichtübereinstimmung.

3. Verfahren nach Anspruch 2,
**dadurch gekennzeichnet, dass**
die Schritte zur Autorisierung bei einem einen vorbestimmten Schwellwert übersteigenden Geldbetrag ausgeführt werden, welcher durch den Dienstbetreiber oder den Geldsender einstellbar ist.

4. Verfahren nach einem der vorangehenden Ansprüche,
**gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des Geldsender-Datensatzes eine Serveradresse oder -rufnummer umfasst und der Transaktions-Server sich mit dieser bzw. diesen nach dem Schritt des Auslesens des Geldempfänger-Datensatzes und des zweiten Geldsender-Datensatzes zur Ausführung der nachfolgenden Schritte verbindet.

5. Verfahren nach einem der vorangehenden Ansprüche,
**dadurch gekennzeichnet, dass**
die Subskription des Geldempfängers beim Dienstbetreiber mit einer Mehrzahl von Konten und/oder Rufnummern erfolgt, wobei die Anzahl der Konten kleiner als die der Rufnummern ist, und wobei alle entsprechenden Konto-Identifikatoren und die Rufnummern im Geldempfänger-Datensatz gespeichert werden.

## Claims

1. Method for transferring an electronic sum of money from a credit memory (money sender's prepaid accounts) which can be operated via a telecommunications or data network, belongs to a money sender and contains a prepaid credit, to an account or to a credit memory belonging to a money receiver (money receiver's prepaid accounts) via a telecommunications and data network in real time, having the following steps:
- a request is made to set up a first connection from a mobile radio terminal belonging to the money receiver (B1, B2, B3, B4 money receiver), having an associated transaction call number, to the mobile radio terminal of the money sender (B1 money sender),
- the transaction call number associated with the money receiver's mobile radio terminal being allocated, within the context of a subscription to a money transfer service by the money receiver with a service operator, specifically for money transfers and not being able to be used for normal telephone calls, and the transaction call number comprising an account identifier for the money receiver's account or credit memory, with the money receiver data record being stored in a transaction database, and
- a connection to a transaction server belonging to the service operator is set up by virtue of the setup request initiating a trigger (TT) in the mobile radio network (switch),
- the sum of money to be transferred is input on the money receiver's mobile radio terminal,
- the sum of money to be transferred is transmitted to the transaction server, and
- a money sender data record, which comprises at least one call number for a mobile radio terminal, an account identifier for the credit memory and an authentication data record for the money sender and which is stored in the transaction database or in a credit management database, is requested,
- the transaction server reads the transaction database and evaluates the money receiver data record and the money sender data record, including setting up optionally required data link(s) to one or more external application(s),
- the coverage of the sum of money is checked in the money sender credit memory, and the sum of money is reserved if it is covered, and the process is terminated with signalling if there is insufficient coverage,
- the sum of money is debited from the money sender credit memory, and this is documented,
- the sum of money is credited to the money receiver account or to the money receiver credit memory, and this is documented,
- information about the debit and/or credit operation is transmitted to the money receiver's terminal.

2. Method according to Claim 1,
**characterized in that**
the authentication data record in the money sender data record comprises an authentication code or biometric data for the money sender, and, before the debit operation step, steps for authorizing said debit operation are performed, namely the following steps:
- the authentication code or the biometric data is/are input by the money sender on his terminal,
- the input is transmitted to the transaction server, and
- the transmitted data are compared with the data held in the money sender data record, and a debit enable signal is output if there is a match and a debit blocking signal is output if there is no match.

3. Method according to Claim 2,
**characterized in that**
the authorization steps are performed for a sum of money which exceeds a predetermined threshold value which can be set by the service operator or the money sender.

4. Method according to one of the preceding claims,
**characterized by**
its being performed by setting up a data link to at least one external server on which the money sender credit memory and/or the money receiver account or the money receiver credit memory are managed, the account identifier of the money receiver data record and/or the account identifier of the money sender data record comprising a server address or server call number, and the transaction server being connected to this or these following the step of reading out the money receiver data record and the second money sender data record in order to perform the subsequent steps.

5. Method according to one of the preceding claims,
**characterized in that**
the money receiver takes out the subscription with the service operator using a plurality of accounts and/or call numbers, the number of accounts being less than the number of call numbers, in particular, and all the corresponding account identifiers and the call numbers being stored in the money receiver data record.

## Revendications

1. Procédé permettant de transférer une somme d'argent électronique à partir d'un système d'enregistrement d'avoir (expéditeur d'argent de comptes prépayés) d'un expéditeur d'argent, maniable par l'intermédiaire d'un réseau de télécommunication ou d'un réseau de données, ce système d'enregistrement d'avoir présentant un avoir payé d'avance sur un compte resp. dans un système d'enregistrement d'avoir d'un récepteur d'argent (récepteur d'argent de comptes prépayés) par l'intermédiaire d'un réseau de télécommunication et d'un réseau de données, en temps réel, comprenant les étapes suivantes :
- demande d'établissement d'une première connexion en partant d'un terminal de radiocommunication mobile du récepteur d'argent (récepteurs d'argent B1, B2, B3, B4), auquel un numéro d'appel de transaction est affecté, vers le terminal de radiocommunication mobile de l'expéditeur d'argent (expéditeur d'argent B1)
- le numéro d'appel de transaction affecté au terminal de radiocommunication mobile du récepteur d'argent étant attribué spécialement pour les transferts d'argent, dans le cadre d'une souscription d'un service de transfert d'argent par le récepteur d'argent auprès d'un exploitant de services, et ne pouvant pas être utilisé pour des communications téléphoniques normales, et le numéro d'appel de transaction comprenant un identificateur de compte du compte resp. du système d'enregistrement d'avoir du récepteur d'argent, le jeu de données du récepteur d'argent étant mémorisé dans une base de données de transaction, et
- établissement d'une connexion à un serveur de transaction de l'exploitant de services par déclenchement d'un trigger (TT) dans le réseau de radiocommunication mobile (switch) en raison de la demande d'établissement,
- entrée de la somme d'argent à transférer sur le terminal de radiocommunication mobile du récepteur d'argent,
- transfert au serveur de transaction de la somme d'argent à transférer, et
- demande d'un jeu de données de l'expéditeur d'argent mémorisé dans la base de données de transaction ou dans une base de données de gestion d'avoir, ce jeu de données comprenant au moins un numéro d'appel d'un terminal de radiocommunication mobile, un identificateur de compte du système d'enregistrement d'avoir et un jeu de données d'authentification de l'expéditeur d'argent,
- lecture à partir de la base de données et analyse du jeu de données du récepteur d'argent et du jeu de données de l'expéditeur d'argent par le serveur de transaction, y compris l'établissement d'une (de) connexion(s) de données nécessaire(s) optionnellement pour une ou plusieurs applications externes,
- vérification, dans le système d'enregistrement d'avoir de l'expéditeur d'argent, de la couverture de la somme d'argent et réservation de la somme d'argent en cas de couverture et abandon avec signalisation en cas de couverture insuffisante,
- prélèvement de la somme d'argent à partir du système d'enregistrement d'avoir de l'expéditeur d'argent et documentation de ce prélèvement,
- comptabilisation de la somme d'argent sur le compte du récepteur d'argent resp. sur le système d'enregistrement d'avoir du récepteur d'argent et documentation de cette comptabilisation,
- transmission au terminal de radiocommunication du récepteur d'argent d'une information sur le prélèvement et/ou la comptabilisation.

2. Procédé selon la revendication 1
**caractérisé en ce que**
le jeu de données d'authentification dans le jeu de données de l'expéditeur d'argent comprend un code d'authentification ou des données biométriques de l'expéditeur d'argent et **en ce que**, avant l'étape du prélèvement, des étapes pour l'autorisation de celui-ci sont exécutées, à savoir les étapes :
- entrée, par l'expéditeur d'argent sur son terminal de radiocommunication mobile, du code d'authentification ou des données biométriques,
- transmission de ceux-ci au serveur de transaction et
- comparaison des données transmises avec les données disponibles dans le jeu de données de l'expéditeur d'argent et sortie d'un signal de libération du prélèvement en cas de concordance resp. d'un signal de blocage du prélèvement en cas de non-concordance.

3. Procédé selon la revendication 2,
**caractérisé en ce que**
les étapes pour l'autorisation sont exécutées pour une somme d'argent dépassant une valeur de seuil prédéterminée, laquelle est réglable par l'exploitant de services ou l'expéditeur d'argent.

4. Procédé selon l'une quelconque des revendications précédentes,
**caractérisé par**
la réalisation, par l'établissement d'une connexion de données à au moins un serveur externe, sur lequel sont gérés le système d'enregistrement d'avoir de l'expéditeur d'argent et/ou le compte du récepteur d'argent resp. le système d'enregistrement d'avoir du récepteur d'argent, l'identificateur de compte du jeu de données du récepteur d'argent et/ou l'identificateur de compte du jeu de données de l'expéditeur d'argent comprenant une adresse de serveur ou un numéro d'appel de serveur et le serveur de transaction se connectant à celle-ci resp. à celui-ci après l'étape de la lecture du jeu de données du récepteur d'argent et du deuxième jeu de données de l'expéditeur d'argent pour réaliser les étapes suivantes.

5. Procédé selon l'une quelconque des revendications précédentes,
**caractérisé en ce que**
la souscription du récepteur d'argent auprès de l'exploitant de services est réalisée au moyen d'une pluralité de comptes et/ou de numéros d'appel, le nombre des comptes étant inférieur à celui des numéros d'appel, et tous les identificateurs de compte correspondants et les numéros d'appels étant mémorisés dans le jeu de données du récepteur d' argent .
